# EUROPÄISCHE PATENTSCHRIFT

(11) **EP 2 211 163 B1**
(45) Veröffentlichungstag und Bekanntmachung des Hinweises auf die Patenterteilung: **30.09.2015**
(21) Anmeldenummer: 09015601.9
(22) Anmeldetag: 17.12.2009
(51) Int. Cl.: G01N 1/42, G01N 1/20, G01N 1/28, G01N 1/31, G01B 9/00, G01N 21/84, G02F 1/00

(54) **Vorrichtung und Verfahren zum Präparieren von Proben**
Method and device for preparing samples
Dispositif et procédé de préparation d'échantillons

(30) Priorität: 22.01.2009 AT 1132009
(43) Veröffentlichungstag der Anmeldung: 28.07.2010
(73) Patentinhaber: Leica Mikrosysteme GmbH, 1170 Wien (AT)
(72) Erfinder: Lihl, Reinhard, 1120 Wien (AT); Resch, Guenter, 1040 Wien (AT)
(74) Vertreter: Hassenbürger, Anneliese

(56) Entgegenhaltungen:
- WO-A1-02/077612
- TRACHTENBERG S: "A FAST-FREEZING DEVICE WITH A RETRACTABLE ENVIRONMENTAL CHAMBER, SUITABLE FOR KINETIC CRYO-ELECTRON MICROSCOPY STUDIES", JOURNAL OF STRUCTURAL BIOLOGY, ACADEMIC PRESS, UNITED STATES, Bd. 123, 1. Januar 1998 (1998-01-01), Seiten 45-55, XP001058943, ISSN: 1047-8477, DOI: 10.1006/JSBI.1998.4015
- CYRKLAFF M ET AL: "PARTICLE-SURFACE INTERACTION IN THIN VITRIFIED FILMS FOR CRYO-ELECTRON MICROSCOPY", JOURNAL OF MICROSCOPY, BLACKWELL SCIENCE, Bd. 175, Nr. PART 02, 1. August 1994 (1994-08-01), Seiten 135-142, XP008000082, ISSN: 0022-2720

## Beschreibung

Die Erfindung betrifft eine Vorrichtung zum Präparieren von Proben für ein Elektronenmikroskop, vorzugsweise ein Kryo-Elektronenmikroskop, mit einem Haltemittel zum Halten eines Trägers, einer bewegbaren Blotting-Einrichtung zum Ableiten von einer auf dem Träger aufgebrachten, überschüssigen Probenflüssigkeit mittels eines im Wesentlichen flächigen Ableitungsmittels, einer Steuerung, welche dazu eingerichtet ist, die Blotting-Einrichtung zum Träger hin zu bewegen, und einer klimatisierbaren Kammer, in welcher das Haltemittel und die Blotting-Einrichtung angeordnet sind.

Weiters betrifft die Erfindung ein Verfahren zum Präparieren von Proben für ein Elektronenmikroskop, vorzugsweise ein Kryo-Elektronenmikroskop, in welchem die oben genannte Vorrichtung eingesetzt wird, wobei das Verfahren die folgenden Schritte umfasst: Befestigen eines Trägers in einer Halteeinrichtung, wobei sich die Halteinrichtung in einer klimatisierbaren Kammer befindet, Aufbringen einer Probenflüssigkeit auf den Träger zum Benetzen der Oberfläche des Trägers mit Probenflüssigkeit, Ableiten der auf dem Träger befindlichen, überschüssigen Probenflüssigkeit mittels eines auf einer bewegbaren Blotting-Einrichtung angeordneten Ableitungsmittels und Aufnahme der Probenflüssigkeit in das Ableitungsmittel, wobei die Blotting-Einrichtung zum Ableiten der Probenflüssigkeit durch das Ableitungsmittel mittels einer Steuerung zum Träger hin bewegt wird, und Wegbewegen der Blotting-Einrichtung vom Träger mittels der Steuerung nach Beendigen des Ableitens überschüssiger Probenflüssigkeit.

Die Leistung der Elektronenmikroskopie, insbesondere der Transmissionselektronenmikroskopie, bei der Erforschung der Ultrastruktur biologischer Proben ist beachtlich. Für aussagekräftige Untersuchungen ist jedoch aufgrund des im Elektronenmikroskop herrschenden Hochvakuums und des energiereichen Elektronenstrahls eine vorhergehende, die Struktur erhaltende Präparation der Probe erforderlich. Übliche Präparationstechniken beinhalten zumeist eine Fixierung der Probe mittels chemischer Fixantien und einen Entzug des Wassers. Zudem erfolgt zum Erhöhen des Kontrasts noch eine künstliche Kontrastierung durch Einführen von Atomen hoher Ordnungszahl, z.B. mittels Uranylacetat bei der Negativkontrastierung. All diese Präparationsschritte können zu Deformationen des zu untersuchenden Objekts bzw. zur Bildung von Artefakten führen und erfordern eine sorgfältige und kritische Bildanalyse.

Die Kryo-Elektronenmikroskopie hat sich als besonders geeignet für strukturbiologische Untersuchungen erwiesen. Bei dieser Technologie wird eine wasserhältige Probe kryofixiert, d.h. sie wird sehr schnell und unter Vermeidung von Eiskristallbildung abgekühlt. Die zu untersuchenden Objekte, beispielsweise Zellen, Enzyme, Viren oder Lipidschichten werden dadurch in einer dünnen vitrifizierten Eisschicht eingebettet und in diesem Zustand mikroskopiert. Kryofixierte Proben halten dem im Elektronenmikroskop herrschenden Hochvakuum stand. Der große Vorteil der Kryo-Fixierung gegenüber den zuvor genannten Fixierungsmethoden liegt darin, dass die biologischen Strukturen in ihrem nativen Zustand erhalten und in ihrer physiologischen Umgebung untersucht werden können. Das Risiko einer Artefaktbildung ist signifikant geringer als bei den chemischen Präparationsmethoden. Allerdings ist auch der Kontrast sehr gering und das niedrige Signal-Rausch-Verhältnis macht eine Reproduktion der Strukturinformationen durch Bildbearbeitung notwendig. Nachteilig ist auch die höhere Empfindlichkeit der kryofixierten Probe gegenüber dem Elektronenstrahl. Auf eine Kontrastierung wird aufgrund der Artefaktbildung weitgehend verzichtet und die Struktur digital rekonstruiert.

Unabhängig von der Art der Probenpräparation ist es für eine hochauflösende transmissionselektronenmikroskopische Abbildung zwingend notwendig, dass die Probe ausreichend dünn ist. Proben für das Transmissioneelektronenmikroskop sind üblicherweise 30-100 nm, vorzugsweise 50-80 nm, dick.

Proben in dieser Dicke können durch Schneiden mittels Ultramikrotom erhalten werden, wobei eine in Polymer eingebettete bzw. eine kryofixierte Probe (Kryoschnitt) in sehr dünne Scheiben geschnitten wird. Diese so genannten Ultradünnschnitte werden dann zum Mikroskopieren auf einen in der Elektronenmikroskopie üblichen Träger (auch "Netz", "Netzchen" oder "Grid" genannt) aufgebracht. Die Ultradünnschnitttechnik hat den Nachteil, dass sie sehr aufwändig und schwer zu automatisieren ist. Anderseits ermöglicht sie das "Hineinsehen" in das Innenleben von Strukturen, z.B. von Zellen oder Organellen, die in der Mitte durchgeschnitten wurden.

Eine andere Präparationsmethode bezieht sich auf das Aufbringen von dünnen Flüssigkeitsfilmen auf einen elektronenmikroskopischen Träger. Bei der Präparation kryoelektronenmikroskopischer Proben wird ein dünner Flüssigkeitsfilm sehr schnell, unter Vermeidung von Eiskristallbildung eingefroren. Dafür wird ein elektronenmikroskopischer Träger ("Netzchen", "Grid") in eine die Probe enthaltende Flüssigkeit getaucht bzw. die Probenflüssigkeit wird mittels einer Pipette auf dem Träger appliziert, die überschüssige Flüssigkeit beispielsweise mittels eines Filterpapiers entfernt, und der auf dem Träger zurückbleibende Flüssigkeitsfilm durch Eintauchen in ein Bad aus beispielsweise flüssigem Ethan kryofixiert. Der Schritt des Entfernens der überschüssigen Flüssigkeit, üblicherweise als "Blotting" bezeichnet, ist dabei maßgeblich für die Qualität und die Reproduzierbarkeit des Flüssigkeitsfilms. Für die Kryo-Elektronenmikroskopie ist eine Dicke des Flüssigkeitsfilms von etwa 70 nm anzustreben. Weiters ist es wünschenswert, wenn das Netzchen möglichst gleichmäßig und reproduzierbar mit dem Flüssigkeitsfilm überzogen ist. Darüber hinaus ist es wünschenswert, eine große Menge an Proben reproduzierbar herzustellen. Da bei der Kryo-Elektronenmikroskopie zumeist auf ein Kontrastierungsmittel verzichtet wird, sind die erhaltenen Bilder verrauscht. Strukturdaten müssen daher mittels digitaler Bildbearbeitung rekonstruiert werden Darüber hinaus zeigen die kryofixierte Proben eine höhere Empfindlichkeit gegenüber dem Elektronenstrahl und werden rasch beschädigt. Zum Erhalten hochauflösender Bilder werden üblicherweise viele ähnliche Bilder gleicher Objekte gemittelt. Die Kryo-Elektronenmikroskopie stellt daher besonders hohe Anforderungen an die Reproduzierbarkeit der Probenpräparate.

Aus der WO 02/077612 A1 (siehe auch EP 1 370 846 B1 und US 020040157284) ist eine Vorrichtung der eingangs genannten Art bekannt geworden, mit welcher das "Blotting" nahezu automatisiert durchgeführt werden kann. Diese Vorrichtung ist unter der Handelsbezeichnung "Vitrobot" auf dem Markt. Bei diesem Gerät wird zuerst ein Träger in einer Halterung fixiert. Nach dem manuellen Aufbringen der Probenflüssigkeit auf dem Träger wird überschüssige Probenflüssigkeit mittels ein oder zwei steuerbaren Blotting-Elementen, welche zum Träger bewegbar sind, abgeleitet ("Blotting"-Vorgang). Zum Ableiten der Flüssigkeit ist auf den Blotting-Elementen ein Medium zum Absorbieren von Flüssigkeit, z.B. ein Filterpapier oder ein anderes Flüssigkeit aufnehmendes Medium, angebracht. Die Halterung und die Blotting-Elemente sind in einer klimatisierbaren, feuchten Kammer angeordnet, um bei der Präparation das Austrocknen des dünnen Flüssigkeitfilms zu verhindern. Nach dem Blotting wird der Probenfilm durch Eintauchen des Trägers in ein Kühlmittel vitrifiziert. Einstellparameter umfassen die Anzahl der Blotting-Vorgänge (ein Träger kann mehrmals geblottet werden), die Dauer des Blottings und die Position des Trägers zum Filterpapier. Die Vorrichtung der WO 02/077612 A1 hat den Nachteil, dass die Blotting-Parameter zwar reproduzierbar sind, jedoch die Optimierung lange Versuchsreihen erfordert, z.B. wenn eine Probenflüssigkeit anderer Viskosität geblottet werden soll. Ein weiterer Nachteil ist in Verbindung mit dem beschriebenen doppelseitigen Blotting-Mechanismus zu nennen. Dabei wird der Träger von zwei Filterpapierscheiben auf beiden Seiten mit leichtem Druck gequetscht. Der Druck ist von der Auflage für das Filterpapier, einer Schaumgummiauflage, abhängig und ist kaum zu beeinflussen. Dies kann sich insbesondere für empfindliche biologische Proben und Beschichtungen des Trägernetzchens negativ auswirken und zu mechanischen Beschädigungen der zu mikroskopierende Objekte bzw. des filigranen Netzchens führen.

Ein der WO 02/077612 ähnliches, semi-automatisiertes, aber einfacher gebautes Gerät wird unter dem Handelsnamen "Cryoplunge 3" von der Firma Gatan vertrieben. Eine weitere Vorrichtung wurde in dem Artikel von S. Trachtenberg "A fast-freezing device with a retractable Enronmental chamber suitable for kinetic cryo-electron microscopy studies", Journal of Structural Biology 123:45-55 (1998) beschrieben. Andere Geräte verfügen nicht über automatische oder motorisierte Blottingmechanismen, wodurch sich keine reproduzierbare Dicke des Flüssigkeitsfilms erreichen läßt. Das Blotting ist ein manueller Vorgang und von der Geschicklichkeit des Anwenders abhängig.

Es ist eine Aufgabe der Erfindung, die Nachteile aus dem Stand der Technik zu beseitigen und ein verbessertes Verfahren bzw. eine verbesserte Vorrichtung zum Durchführen des Blotting-Vorgangs bereitzustellen, wodurch ein verlässliches Steuern und Automatisieren dieses Vorgangs ermöglicht wird.

Diese Aufgabe wird durch eine Vorrichtung der eingangs genannten Art gelöst, bei welcher erfindungsgemäß die Vorrichtung weiters eine optische Sensoreinrichtung mit einer Lichtquelle und einem Empfänger aufweist, und die optische Sensoreinrichtung eingerichtet ist, das Ableitungsmittel mittels der Lichtquelle zu beleuchten und eine Änderung der optischen Eigenschaften des Ableitungssmittels mittels des Empfängers zu detektieren und der Steuerung zuzuführen, und die Steuerung dazu eingerichtet ist, bei einer Änderung der optischen Eigenschaften des Ableitungsmittels die Blotting-Einrichtung vom Träger weg zu bewegen.

Das der Erfindung zugrundeliegende Verfahren weist dementsprechend die erfindungsgemäßen Schritte auf:
- Detektieren der sich durch das Aufnehmen der überschüssigen Probenflüssigkeit in das Ableitungsmittel ergebenden Änderung der optischen Eigenschaften des Ableitungsmittelsmittels mit einer optischen Sensoreinrichtung, welche eine Lichtquelle und einen Empfänger aufweist, wobei die Lichtquelle das Ableitungsmittel beleuchtet und der Empfänger die Änderung der optischen Eigenschaften detektiert, und die Änderung der optischen Eigenschaften des Ableitungsmittels der Steuerung zugeführt wird, sowie
- Wegbewegen der Blotting-Einrichtung vom Träger aufgrund der von der optischen Sensoreinrichtung detektierten und der Steuerung zugeführten Änderung der optischen Eigenschaften des Ableitungsmittels.

Dank des erfindungsgemäßen Verfahrens bzw. der erfindungsgemäßen Vorrichtung wird das Ableiten der überschüssigen Probenflüssigkeit vom Träger ("Blotting"-Vorgang) automatisch erfasst und ein verlässliches Signal zum Steuern und Automatisieren dieses Vorgangs zur Verfügung gestellt. Es kann eine große Anzahl an Proben reproduzierbar hergestellt werden. Im Gegensatz zu der WO 02/077612 A1 bekannten Vorrichtung, sind keine langen Versuchsreihen zum Optimieren des Vorgangs notwendig. Eine reproduzierbare Probenpräparation wird dank der Erfindung erheblich erleichtert.

Die Erfindung ist besonders vorteilhaft für die Präparation von Proben, die biologisches Material enthalten, da biologisches Material grundsätzlich einen schlechten Kontrast im Elektronenmikroskop liefert und die Anforderungen an reproduzierbare Proben daher besonders hoch sind.

Die Erfindung ist für alle Präparationsmethoden in der Elektronenmikroskopie geeignet, bei welchen das Auftragen eines Flüssigkeitsfilms reproduzierbarer Dicke auf einen Träger vorgesehen ist. Die Erfindung ist in erster Linie für die Präparation kryoelektronenmikroskopischer Proben vorgesehen, da hier besonders hohe Anforderungen an reproduzierbare Proben bestehen.

Die optische Sensoreinrichtung zum Detektieren einer Änderung der optischen Eigenschaften des Ableitungsmittels weist eine Lichtquelle und einen Empfänger auf, wobei die Lichtquelle das Ableitungsmittel beleuchtet und der Empfänger die optischen Eigenschaften des Ableitungsmittels detektiert. Wird die Blotting-Einrichtung zum Träger hinbewegt und berührt das Ableitungsmittel den Träger, so leitet das Ableitungsmittel die überschüssige Flüssigkeit ab und nimmt sie auf.

Unter dem Begriff "Ableitungsmittel" ist im Wesentlichen ein Material zu verstehen, welches in der Lage ist, Flüssigkeit aufzunehmen und durch die Flüssigkeitsaufnahme die optischen Eigenschaften zu ändern. Das Ableitungsmittel kann beispielsweise ein Filterpapier oder ein anderes saugfähiges Material sein, in welchem sich die Flüssigkeit rasch ausbreitet und die aufgenommene Flüssigkeit einen feuchten Bereich bzw. "Fleck" bildet. In jenem feuchten Bereich des Ableitungsmittels ändern sich die optischen Eigenschaften. Die Änderung der optischen Eigenschaften basiert vorzugsweise auf einer schlagartigen Zu- oder Abnahme der Transmission des Lichts.

Die von der optischen Sensoreinrichtung detektierte Änderung der optischen Eigenschaften des Ableitungsmittels wird der Steuerung zugeführt. Die Steuerung bewegt nach Empfang dieses Signals die Blotting-Einrichtung vom Träger weg, wodurch der Blotting-Vorgang beendet wird.

Der Begriff "Träger" bezieht sich auf alle für die Elektronenmikroskopie geeigneten Träger, insbesondere auf die bereits oben erwähnten Grids ("Netzträger", "Netzchen", "Netz"), wobei die Grids verschiedenartig geformte Löcher (Waben, Schlitze etc.) oder ein Gitter definierter mesh-Zahl aufweisen und/oder mit einem Film beschichtet (z.B. beschichtete Grids der Firma Quantifoil) und/ oder kohlebedampft sein können.

Das Haltemittel ist so ausbildet, dass das üblicherweise sehr filigrane und kleine Grid (Durchmesser 2-3 mm) sicher fixiert wird. Bei einer bevorzugten Variante umfasst das Haltemittel ein Rastelement mit einem ersten Bereich zum Fixieren des Haltemittels im Gerät und einem zweiten Bereich zum Einspannen einer Pinzette mit einer sehr feinen Spitze. Der Träger wird mittels der Pinzette gehalten. Das Haltemittel ist so ausgebildet, dass es rasch und mit wiederholbarer Genauigkeit am Gerät montiert und wieder entfernt werden kann. Die im Rastelement eingespannte Pinzette kann ebenfalls getauscht werden. Das Haltemittel ist drehbar um seine Längsachse gelagert, um das Blotten von der gewünschten Seite des Netzes zu gestatten. Ferner hat der Bediener dadurch die Möglichkeit, die Probenflüssigkeit, die üblicherweise manuell mit einer Pipette auf dem Netzchen aufgebracht wird, mit der bevorzugten Hand aufzubringen.

Die Blotting-Einrichtung kann mit einem steuerbaren Antrieb, insbesondere einem Schrittmotorantrieb, bewegt werden. Das Ableitungsmittel, welches auf der Blottingeinrichtung angeordnet und austauschbar ist, wird dadurch zum Träger bewegt bzw. nach dem Detektieren einer Änderung seiner optischen Eigenschaften wieder von diesem wegbewegt. Bei einer bevorzugten Realisierung ist das Ableitungsmittel scheibenförmig, z.B. eine Filterpapierscheibe, die drehbar auf einem in der Scheibenmitte befindlichen Ring befestigt ist. Nach jedem Blotting-Vorgang wird die Scheibe weitergedreht und kann dadurch mehrfach verwendet werden. Aus Gründen der Reproduzierbarkeit ist das Ableitungsmittel standardisiert, insbesondere hinsichtlich seiner Dicke und Materialqualität. Bei einer besonders bevorzugten Variante ist das Ableitungsmittel Filterpapier einer bestimmten Sorte und Qualität. Durch Aufnahme von Flüssigkeit während des Blotting-Vorgangs entsteht auf dem Filterpapier ein feuchter Bereich höherer Lichttransmission. Als Ableitungsmittel ist erfindungsgemäß wie oben bereits erwähnt auch jedes Flüssigkeit-aufnehmende Material geeignet, welches bei Aufnahme von Flüssigkeit seine optischen Eigenschaften ändert.

In Abhängigkeit der Probenflüssigkeit kann es zweckmäßig sein, wenn zwischen dem Detektieren der Änderung der optischen Eigenschaften und dem Wegbewegen der Blotting-Einrichtung vom Träger, die Blotting-Einrichtung noch für eine vorgebbare Zeit in ihrer Position gehalten wird. Die Blotting-Einrichtung wird hier nicht unmittelbar nach der Detektion des Signals vom Träger wegbewegt, sondern verbleibt noch eine vorgebbare Zeit in ihrer Position. Der Blotting-Vorgang ist dadurch noch besser und individueller steuerbar.

Das Haltemittel mit dem Träger, sowie die Blotting-Einrichtung sind in einer klimatisierbaren Kammer angeordnet, um das Austrocken des dünnen Flüssigkeitsfilms und die damit verbundene Zerstörung der Untersuchungsobjekte zu vermeiden.

Für einen reproduzierbaren Blotting-Vorgang ist es bei einer bevorzugten Variante von Vorteil, wenn das Ableitungsmittel im Wesentlichen flächig, beispielsweise ein Filterpapier, ist und beim Ableiten der Probenflüssigkeit ein Bereich des Ableitungsmittels im Wesentlichen parallel zur Oberfläche des Trägers orientiert ist.

Bei einer besonders vorteilhaften Untervariante ist die Bewegung des auf der Blotting-Einrichtung angeordneten Ableitungsmittels zum Träger hin durch eine als Anschlag dienende Komponente der Halteeinrichtung begrenzt. Die an der Halteeinrichtung befindliche Komponente kann beispielsweise die Spitze einer den Träger haltenden Pinzette sein. Der Anschlag kann aber auch durch ein von der Haltereinrichtung unabhängiges Element gebildet werden. Der Anschlag ermöglicht bei weiterer Annäherung des im Wesentlichen parallel zur Trägeroberfläche befindlichen Ableitungsmittels an den Träger eine Verbiegung des Ableitungsmittels und damit einen einstellbaren Winkel zwischen dem Ableitungsmittel und dem Träger. Das Ableitungsmittel berührt den Träger an seinem Rand, wodurch die Flüssigkeit über diese Seite abgeleitet wird. Dies entspricht den Erfahrungen des manuellen Ableitens überschüssiger Probenflüssigkeit. Das manuelle Absaugen der Flüssigkeit von der Randregion des Trägers mit einem Filterpapier hat sich als besonders vorteilhaft zum Herstellen reproduzierbarer und gleichmäßiger Flüssigkeitsfilme erwiesen.

Da der Träger einen Teil des Ableitungsmittels abdeckt, ist es zweckmäßig, wenn die Änderung der optischen Eigenschaften des Ableitungsmittels in einem Bereich detektiert wird, welcher sich außerhalb des im Wesentlichen parallel zur Trägeroberfläche orientierten Bereichs des Ableitungsmittels befindet. Sender und Empfänger sind auf einen Bereich des Ableitungsmittels gerichtet, der üblicherweise befeuchtet wird. Der feuchte Bereich bzw. der beim Ableiten der Flüssigkeit entstehende Fleck sollte folglich auch größer als die Fläche des Trägers sein. Die Größe des Flecks wird unter anderem auch durch das auf den Träger aufgebrachte Volumen an Probenflüssigkeit bestimmt. Dabei hat sich in der Praxis gezeigt, dass es für die praktische Umsetzung günstig ist, wenn zumindest 3 µl, vorzugsweise 4-5 µl Probenflüssigkeit auf dem Träger aufgebracht werden.

Hinsichtlich der Anordnung des Senders und des Empfängers der optischen Sensoreinrichtung ist bei einer vorteilhaften Variante das im Wesentlichen flächige Ableitungsmittel zwischen der Lichtquelle und dem Empfänger angeordnet. Bei dieser Variante kann die optische Sensoreinrichtung in Form einer Lichtschranke ausgebildet sein, deren optische Achse sich quer durch das Ableitungsmittel in einem Bereich, welcher durch das Ableiten befeuchtet wird, erstreckt. Beispielsweise kann die Aufnahme von Flüssigkeit durch ein Filterpapier zu einer schlagartigen Zunahme der Transmission des Lichts an der feuchten Stelle führen. Die Änderung der Transmission wird von der Lichtschranke detektiert.

Es ist für das Einstellen der optischen Sensoreinrichtung und für die Detektion zweckmäßig, wenn die optische Sensoreinrichtung auf der Blotting-Einrichtung angeordnet ist. Die optische Sensoreinrichtung wird mit der Blotting-Einrichtung mitbewegt, wenn sich die Blotting-Einrichtung zum Ableiten der Probenflüssigkeit zum Träger bewegt bzw. sich von diesem wegbewegt.

Es ist auch möglich, die optische Sensoreinrichtung an der Kammerwand anzuordnen. Die optische Sensoreinrichtung wird dabei nicht mit der Blotting-Einrichtung mitbewegt. Allerdings hat diese Realisierung den Nachteil, dass der Abstand zwischen Sender und Empfänger größer ist und das Signal daher schlechter sein kann als bei einer auf der Blotting-Einrichtung angeordneten Sensor-Einrichtung.

Wegen der Streuwirkung des Lichts am Ableitungsmittel ist es nicht zwingend notwendig, das Sender und Empfänger der Lichtschranke auf einer Linie liegen. Die Strahlen von Sender und Empfänger sollen sich jedoch auf dem Ableitungsmittel treffen und einen Winkel von vorzugsweise kleiner als 30° in Bezug auf die optische Achse einschließen.

Wird die erfindungsgemäße Vorrichtung zur Präparation von kryoelektronenmikroskopischen Proben eingesetzt, dann weist die Vorrichtung weiters eine Kühleinrichtung zum Abkühlen des mit Probenflüssigkeit benetzten Trägers auf. Der Träger wird nach dem Ableiten der überschüssigen Probenflüssigkeit und dem Wegbewegen der Blottingeinrichtung in einer Kühleinrichtung abgekühlt. Wie oben beschrieben, hat dieser Vorgang sehr rasch zu erfolgen, um die Bildung von Eiskristallen, welche die Struktur der Untersuchungsobjekte zerstören, zu unterbinden. Die Probenflüssigkeit wird vitrifiziert, d.h. sie erstarrt in einem glasartigen Zustand. Zweckmäßigerweise wird die auf dem Träger befindliche Probenflüssigkeit durch Eintauchen des Trägers in ein Kühlmittel vitrifiziert. Vorzugsweise wird als Kühlmittel flüssiges Ethan verwendet. Da nach dem Herstellen des dünnen Flüssigkeitsfilms auf dem Träger jeglicher Kontakt des Trägers mit der Außenumgebung vermieden werden soll, wird der Träger direkt von der klimatisierbaren Kammer in das Kühlmittel befördert. Beispielsweise kann die Kühlvorrichtung direkt unter der klimatisierbaren Kammer angeordnet sein. Nach dem Blotting-Vorgang, wird eine Öffnung am Kammerboden freigegeben und der Träger in einen darunter befindlichen Kryogenbehälter abgesenkt.

Im Folgenden wird die Erfindung samt weiteren Vorzügen anhand eines nicht einschränkenden Ausführungsbeispiels erläutert, das in den beigefügten Zeichnungen dargestellt ist. Die Zeichnungen zeigen in:
Fig. 1 das Probenpräparationssystem gemäß dem Ausführungsbeispiel in einer Schrägansicht,
Fig. 2 eine vergrößerte Ansicht der offenen Präparationskammer aus der Fig. 1,
Fig. 3 eine stärker vergrößerte Ansicht der Präparationskammer aus der Fig. 1, bei welcher die Blotting-Einrichtung vom Träger weg gerichtet ist,
Fig. 4 die stärker vergrößerte Ansicht der Präparationskammer aus der Fig. 1 mit der zum Träger hin bewegten Blotting-Einrichtung, und
Fig. 5 ein Blockdiagramm des Regelkreises des Blotting-Vorgangs.

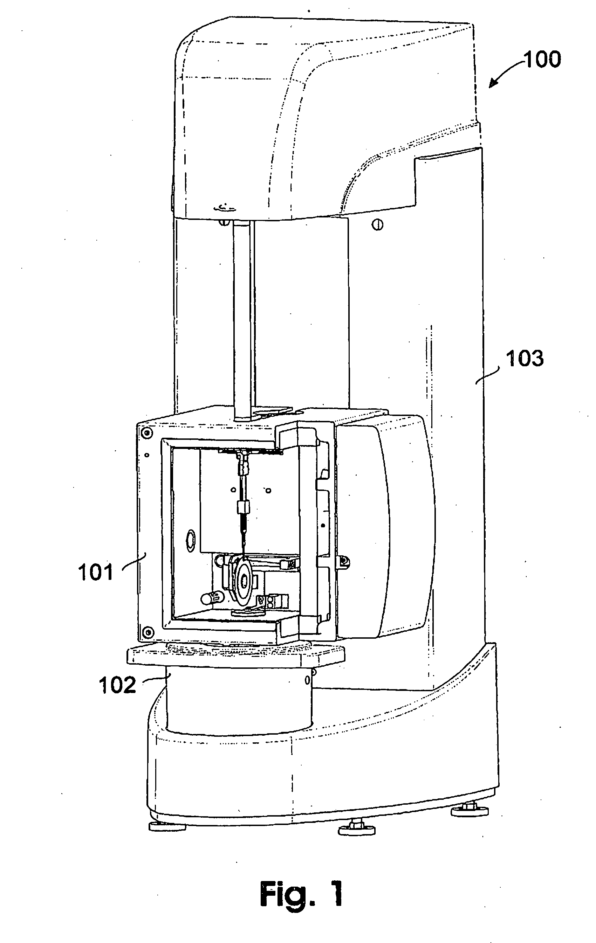

Die Fig. 1 zeigt eine Schrägansicht einer Vorrichtung 100 zum Präparieren von Proben für ein Kryo-Elektronenmikroskop. Die Vorrichtung 100 weist als wesentliche Komponenten eine klimatisierbare Präparationskammer 101 und eine Kühleinrichtung 102 auf. Die Kühleinrichtung 102, in welcher sich ein Behältnis mit einem Kryogen befindet, ist unmittelbar unter der Präparationskammer 101 angeordnet. Das Behältnis mit dem Kryogen ist aus der Vorrichtung entfernbar, um die vitrifizierte Probe in das Elektronenmikroskop transferieren zu können. Im verschalten Rückenteil 103 der Vorrichtung 100 sind diverse Schrittmotoren sowie eine Steuerung untergebracht, die hier nicht näher dargestellt sind.

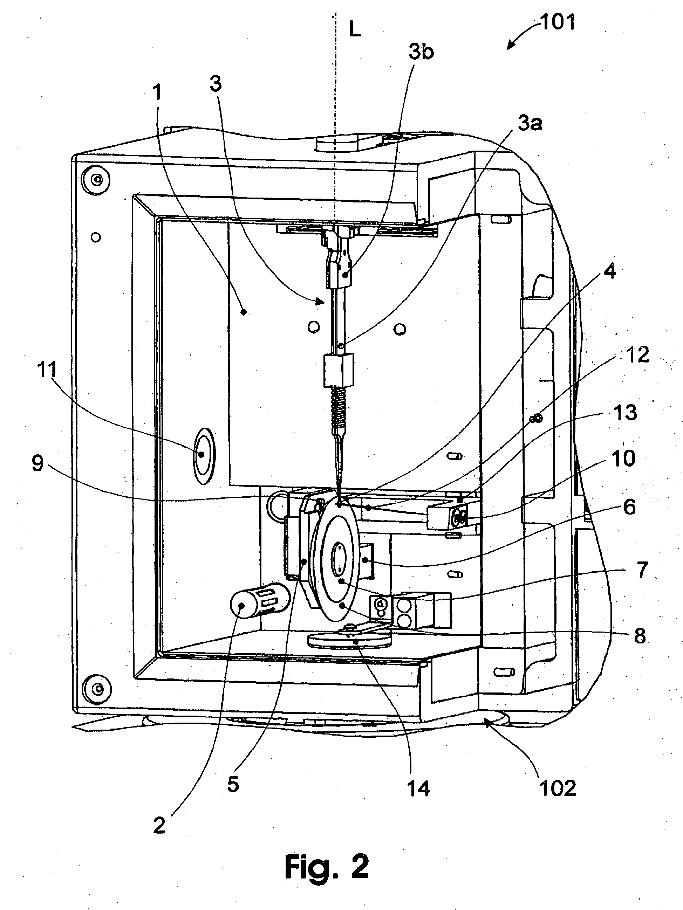

Die Fig. 2 zeigt eine vergrößerte Ansicht der offenen Präparationskammer aus der Fig. 1. Die Präparationskammer ist klimatisierbar. Zum Einstellen der Temperatur sind an der Rückseite der Kammer Heiz- und Kühlelemente 1 angebracht. Mittels eines Piezozerstäubers, welcher seitlich außerhalb der Kammer 101 angeordnet und in der Fig. 2 nicht dargestellt ist, kann über eine Rohrverbindung die Luftfeuchtigkeit in der Kammer 101 erhöht werden. Die Luftfeuchtigkeit und die Temperatur werden über einen Sensor 2 geregelt. In der Präparationskammer 101 befindet sich weiters eine Halteeinrichtung 3 für ein Trägernetz 4. Die Halteeinrichtung 3 in diesem Ausführungsbeispiel ist zweiteilig ausgeführt und umfasst eine Pinzette 3a zum Fixieren des Trägernetzes 4 sowie eine Rastelement 3b, das einerseits die Pinzette 3a aufnimmt und andererseits die Halteeinrichtung 3 im Gerät fixiert. Damit der Bediener das Trägernetz 4 mit der Pinzette 3a bequem außerhalb der Präparationskammer in der Pinzette einspannen kann, kann die gesamte Netzhalterung 3 rasch und mit wiederholbarer Genauigkeit am Gerät befestigt und wieder entfernt werden. Die Pinzette 3a kann bei Bedarf ebenfalls einfach getauscht werden. Die Halteeinrichtung 3 ist um 180° in beide Richtungen um ihre Längsachse L drehbar.

Die Probenflüssigkeit wird manuell mittels einer Pipette auf das Trägernetz 4 aufgetragen. Hierfür weist die Präparationskammer 100 eine vorzugsweise seitlich angeordnete Öffnung 11 zum Einführen der Pipette in der Höhe des Trägernetzes 4 auf. Das aufgetragene Flüssigkeitsvolumen beträgt üblicherweise 4-5 µl.

Zum Ableiten der überschüssigen Flüssigkeit ist in der Präparationskammer 101 eine Blotting-Einrichtung 5 vorgesehen, welche mittels eines im Rückenteil 103 untergebrachten (siehe Fig. 1) und hier nicht dargestellten Schrittmotorantriebs zum Trägernetz 4 hin und von diesem wieder wegbewegt werden kann. Die Bewegung der Blotting-Einrichtung 5 wird mittels der Steuerung kontrolliert. In der dargestellten Ausführungsform ist die Blotting-Einrichtung schwenkbar gelagert, und zwar um eine zur Längsachse L der Halteeinrichtung 3 parallelen Achse. Die Blotting-Einrichtung 5 besteht aus einem Schwenkarm 6, auf welchem eine Befestigungsring 7 für ein scheibenförmiges Filterpapier 8 montiert ist. Wird die Blotting-Einrichtung 5 zum Trägernetz 4 hinbewegt, so berührt schließlich das Filterpapier 8 nahezu parallel das Trägernetz 4, und die überschüssige Flüssigkeit auf dem Trägernetz 4 wird mit dem Filterpapier 8, welches als Ableitungsmittel dient, von der Trägeroberfläche entfernt. Zurück bleibt ein dünner Flüssigkeitsfilm mit ca. 70 nm Dicke. Das Ableiten der überschüssigen Flüssigkeit wird auch als "Blotting" oder "Blotten" bezeichnet.

Zum Überwachen des Blotting-Vorgangs ist in der Präparationskammer 101 eine optische Sensoreinrichtung in Form einer Lichtschranke 12 vorgesehen. Die Lichtschranke, die mit Hilfe einer Lichtquelle 9 und einem Empfänger 10 realisiert ist, ist durch einen verbindenden Strahl 12 dargestellt. Bei der gezeigten Ausführungsform sind die Lichtquelle 9 und der Empfänger 10 auf der Blotting-Einrichtung 5 angeordnet und werden, wenn die Blotting-Einrichtung 5 bewegt wird, mit dieser mitbewegt. Der Empfänger 10 ist auf einem Verlängerungsarm 13 angeordnet. Ein Vertauschen der Lichtquelle 9 und des Empfängers 10 hat keine Auswirkung auf die Detektion. Wegen der Streuwirkung des Lichts am Filterpapier ist es auch nicht notwendig, dass Lichtquelle 9 und Empfänger 10 der Lichtschranke auf einer Linie liegen. Die Strahlen von Lichtquelle 9 und Empfänger 10 sollten sich jedoch am Filterpapier 8 treffen und einen Winkel von vorzugsweise kleiner als 30° in Bezug auf die optische Achse einnehmen. In der Praxis haben sich die Einweg-Lichtschranken MICROmote® DLM30R (Lichtart: Rot 660nm; Nenn-Reichweite: 300 mm) bzw. DLM30L (Lichtart: Infrarot 880nm; Nenn-Reichweite: 800mm) der Firma STM als besonders günstig erwiesen, weil sie bei einer sehr kleinen Bauweise eine sehr große Reichweite zulassen. Die MICROmote® Einweg-Lichtschranken werden mit einem separaten Schaltverstärker (V8-A, V8-B oder V8-F) betrieben, der einen automatischen sowie einen manuellen Modus zum Einstellen der Empfindlichkeit aufweist.

Nach dem Blotting-Vorgang wird eine Öffnung am Kammerboden durch eine Verschlussklappe 14 freigegeben und das Trägernetz 4 sehr schnell durch vertikales Bewegen der Halteeinrichtung 3 in den unter der Kammer befindlichen Kryogenbehälter der Kühleinrichtung 102 abgesenkt, wodurch der auf dem Trägernetz 4 befindliche Flüssigkeitsfilm vitrifiziert wird.

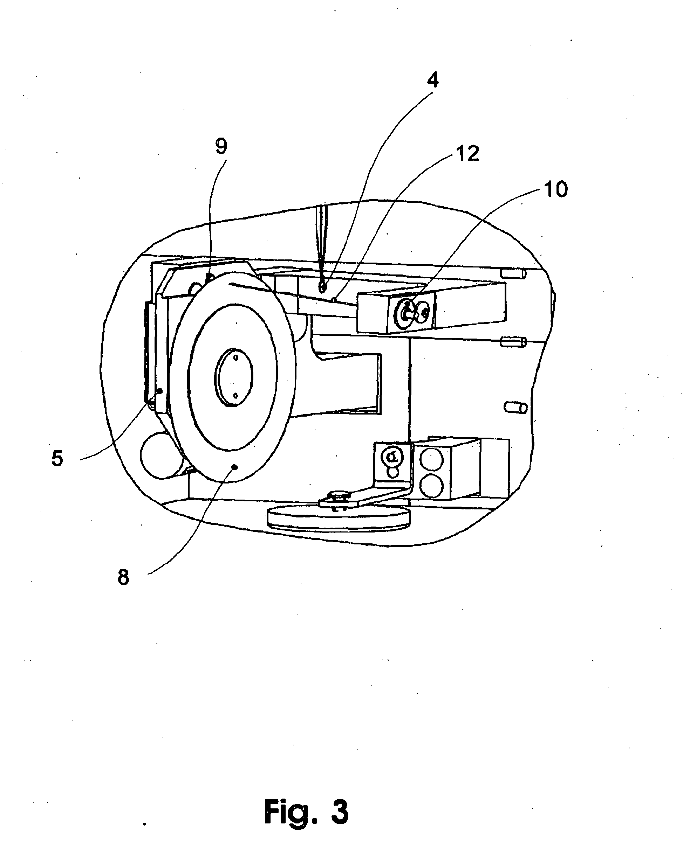

### Der Blotting-Vorgang wird anhand der Fig. 3 bis 5 noch näher erläutert:

Die Fig. 3 eine stärker vergrößerte Ansicht der Präparationskammer aus der Fig. 1, bei welchem die Blotting-Einrichtung 5 vom Trägernetz 4 weg gerichtet ist. Dies ist der Ausgangszustand. In diesem Zustand wird die Probenflüssigkeit wie oben in der Fig. 2 beschrieben mittels Pipette auf dem Trägernetz 4 aufgebracht. Am Netz 4 bildet sich dadurch ein Flüssigkeitsmeniskus. Die Lichtschranke 12 mit der Lichtquelle 9 und dem Empfänger 10 ist wieder mit einem Verbindungsstrahl 12 dargestellt.

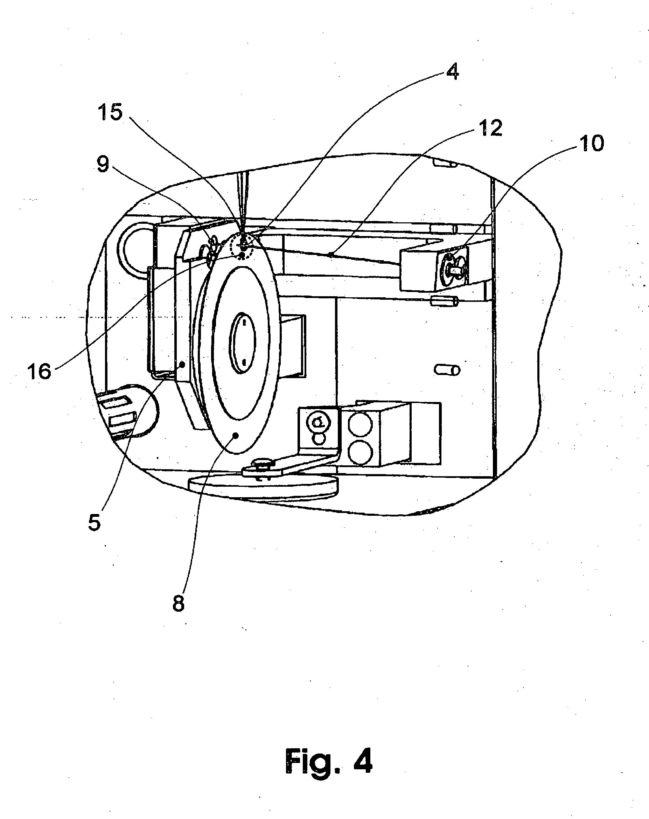

Im nächsten Schritt wird die Blotting-Einrichtung 5 mit definierter Geschwindigkeit zuerst etwas schneller und dann langsam an das Trägernetz 4 angenähert, bis der Schaltpunkt der Sensoreinrichtung, also der Punkt, an dem der Empfänger 10 ein Signal detektiert, erreicht wird. Die Annäherung wird gestoppt. Die Lichtquelle 9 und der Empfänger 10 sind beide an der Blotting-Einrichtung 5 befestigt und werden mit dieser mitbewegt. Dieser Zustand ist in der Fig. 4 dargestellt. Das Filterpapier 8 ist nun im Wesentlichen parallel zur Oberfläche des Trägernetzes 4 orientiert. Durch die Pipettenspitze 15, welche als Anschlag für das Filterpapier 8 dient, wird das Filterpapier 8, welches mit leichtem Druck auf der Pipettenspitze 15 aufliegt, verbogen, und es bildet sich zwischen dem Filterpapier 8 und dem Trägernetz 4 ein Winkel, der übern den Auflagedruck einstellbar ist, aus. Das Filterpapier 8 berührt das Trägernetz 4 an seinem der Pipettenspitze 15 gegenüberliegenden Rand. Wenn das Filterpapier 8 das Trägernetz 4 berührt und die überschüssige Flüssigkeit absaugt, breitet sich die Flüssigkeit rasch im Filterpapier 8 aus und es bildet sich rund um das Trägernetz 4 ein feuchter Bereich 16 (durch gestrichelte Linie dargestellt) bzw. ein Fleck. An dieser feuchten Stelle ändert sich die Transmission des Lichts schlagartig, normalerweise nimmt sie zu. Diese schlagartige Änderung der Transmission wird im Empfänger 10 der Lichtschranke 12 als Signal detektiert und das Signal der Steuerung (nicht dargestellt) über eine Signalverbindung zugeführt. Dabei ist es zweckmäßig, wenn der Fleck größer als das Netz 4 ist, da das Netz 4 einen Teil des Filterpapiers 8 abgedeckt. Der Sprung in der Lichtintensität wird folglich in einem Bereich, der sich außerhalb der Trägernetzfläche befindet, erfasst. Die Lichtquelle 9 und der Empfänger 10 sind deshalb auf einen Bereich des Filterpapiers 8 gerichtet, der üblicherweise benetzt wird, aber sich außerhalb des vom Trägernetz 4 abgedeckten Bereichs des Filterpapiers 8 befindet.

Der nächste Schritt, die "Haltezeit", ist optional und von der jeweiligen Probe abhängig. Die Haltezeit gibt an, wie lange nach Erreichen des Schaltpunktes der Sensoreinrichtung der Kontakt zwischen dem Filterpapier 8 und dem Trägernetz 4 aufrecht erhalten wird. In der Haltezeit wird die Position der Blotting-Einrichtung 5 nicht verändert. Die Haltezeit ist unabhängig von der Sensoreinrichtung in der Steuerung vorab einstellbar.

Sobald der Schaltpunkt der Sensoreinrichtung erreicht wird bzw. die Haltezeit vorüber ist, gibt die Steuerung den Schrittmotoren das Signal, die Blotting-Einrichtung 5 wieder vom Trägernetz 4 weg in ihre Ausgangsposition, wie in der Fig. 3 dargestellt, zu bewegen.

Das Trägernetz 4, welches nun mit einem dünnen Probenfilm bedeckt ist, wird sodann durch eine Öffnung im Boden der Präparationskammer 101 in das Kryogen, vorzugsweise flüssiges Ethan, abgesenkt.

Zuletzt wird das scheibenförmige Filterpapier 8 mittels eines gesteuerten Drehmechanismus im Befestigungsring 7 um ein Stück weitergedreht, sodass ein unbenetzter Bereich am Filterpapier 8 für den nächsten Blotting-Vorgang zur Verfügung steht.

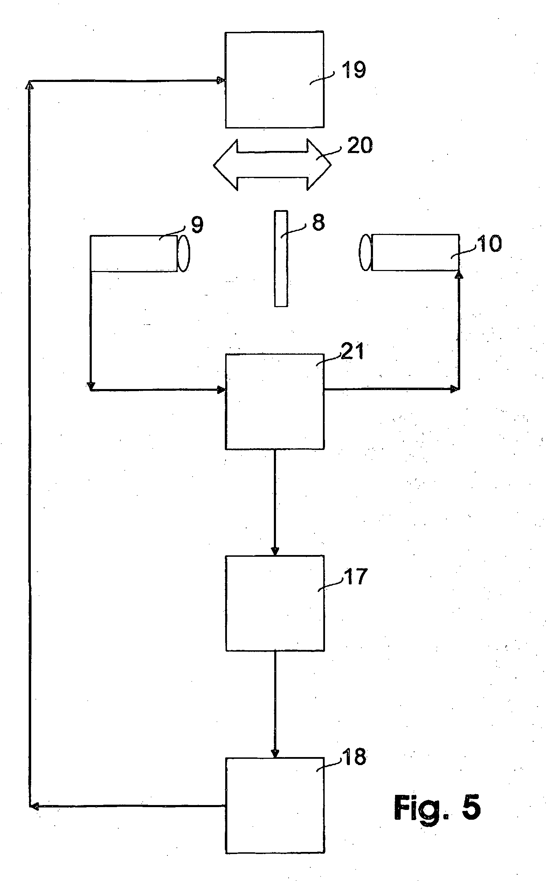

In der Fig. 5 ist der Regelkreis des Blotting-Vorgangs noch einmal in einem Blockdiagramm dargestellt. Die Bewegung der Blotting-Einrichtung 5, auf welcher das Filterpapier 8 angeordnet ist, erfolgt mittels eines Schrittmotors 19. Der Schrittmotor 19 wird über einen Schrittmotortreiber 18 von der Steuerung 17 gesteuert. Durch die Bewegung der Blotting-Einrichtung 5 wird das Filterpapier 8 zum Trägernetz 4 (nicht dargestellt) hin- bzw. wegbewegt. Die Bewegungsrichtungen des Filterpapiers 8 bzw. der Blotting-Einrichtung 5 sind durch den Doppelpfeil 20 symbolisiert. Das Filterpapier 8 ist zwischen der Lichtquelle 9 und dem Empfänger 10 angeordnet. Die Lichtquelle 9 und der Empfänger 10 sind über einen Schaltverstärker 21 mit der Steuerung 17 verbunden. Beim Blotten wird die Blotting-Einrichtung 5 mittels des gesteuerten Schrittmotors 19 zum Trägernetz 4 hinbewegt und das Filterpapier 8 leitet die überschüssige Probenflüssigkeit vom Trägernetz 4 ab. Wird nun vom Empfänger 10 eine Änderung der Lichttransmission des Filterpapiers 8 detektiert, so wird dies an die Steuerung 17 weitergeleitet. Die Steuerung 17 verarbeitet dies wie oben beschrieben und gibt dem Schrittmotor das Signal, die Blotting-Einrichtung 5 und somit das Filterpapier 8 wieder vom Trägernetz 4 weg zu bewegen.

In der Praxis wird einmalig vor Inbetriebnahme eine Eichung des Geräts mit definierter Flüssigkeitsmenge und Wasser (oder gegebenenfalls ein anderes Lösungsmittel) durchgeführt und die optische Sensoreinrichtung auf die Größe des gebildeten feuchten Bereichs auf dem Filterpapier abgestellt. Der Großteil der Proben ist wässrig und bezüglich des Blotting-Verhaltens mit jenem des Wassers gleichzusetzen. Nach dem Eichen des Gerätes muss sich der Bediener lediglich an die definierte Flüssigkeitsmenge zu halten. Dies ist ein großer Vorteil gegenüber der oben genannten Vorrichtung der WO 02/077612 A1 (Vitrobot), die aufwändige Versuchsreihen erfordert. Ausnahme hierzu sind industrielle Proben, wie beispielsweise Lacke, für die das Gerät neu geeicht werden müsste. Für diese Anwendung kann auch auf die Automatik mit Sensor verzichtet werden und die Blotting-Einrichtung lediglich auf eine Endposition gesteuert werden. In einem im Gerät vorgesehenen Justiermodus kann diese Endposition unter visueller Beobachtung sehr genau eingestellt und gespeichert werden. Die Endposition ist dann reproduzierbar für alle weiteren Proben und erfordert keine langen Versuchsreihen. Auch das bietet einen Vorteil gegenüber dem Vitrobot, der beim doppelseitigen Blotten die beiden Filterpapiere mittels Schaumstoffauflage ohne Positioniergenauigkeit gegen das Trägernetz presst.

## Patentansprüche

1. Verfahren zum Präparieren von Proben für ein Elektronenmikroskop, insbesondere für ein Kryo-Elektronenmikroskop, die Schritte umfassend:
- Befestigen eines Trägers (4) in einer Halteeinrichtung (3), wobei sich die Halteinrichtung (3) in einer klimatisierbaren Kammer (101) befindet,
- Aufbringen einer Probenflüssigkeit auf den Träger (4) zum Benetzen der Oberfläche des Trägers (4) mit Probenflüssigkeit,
- Ableiten der auf dem Träger (4) befindlichen, überschüssigen Probenflüssigkeit mittels eines auf einer schwenkbaren Blotting-Einrichtung (5) angeordneten Ableitungsmittels (8) und Aufnahme der Probenflüssigkeit in das Ableitungsmittel (8), wobei die Blotting-Einrichtung (5) zum Ableiten der Probenflüssigkeit durch das Ableitungsmittel (8) mittels einer Steuerung (17) zum Träger (4) hin bewegt wird,
- Detektieren der sich durch das Aufnehmen der überschüssigen Probenflüssigkeit in das Ableitungsmittel (8) ergebenden Änderung der optischen Eigenschaften des Ableitungsmittelsmittels (8) mit einer optischen Sensoreinrichtung (12), welche eine Lichtquelle (9) und einen Empfänger (10) aufweist, wobei die Lichtquelle (9) das Ableitungsmittel (8) beleuchtet und der Empfänger (10) die Änderung der optischen Eigenschaften detektiert, und die Änderung der optischen Eigenschaften des Ableitungsmittels (8) der Steuerung (17) zugeführt wird,
- Wegbewegen der Blotting-Einrichtung (5) vom Träger (4) aufgrund der von der optischen Sensoreinrichtung (12) detektierten und der Steuerung (17) zugeführten Änderung der optischen Eigenschaften des Ableitungsmittels (8).

2. Verfahren nach Anspruch 1, **dadurch gekennzeichnet, dass** das Ableitungsmittel (8) im Wesentlichen flächig ist und beim Ableiten der Probenflüssigkeit ein Bereich des Ableitungsmittels (8) im Wesentlichen parallel zur Oberfläche des Trägers (4) orientiert ist.

3. Verfahren nach Anspruch 2, **dadurch gekennzeichnet, dass** die Bewegung des auf der Blotting-Einrichtung (5) angeordneten Ableitungsmittels (8) zum Träger (4) hin durch eine als Anschlag dienende Komponente (15) der Halteeinrichtung (3) begrenzt wird.

4. Verfahren nach Anspruch 2 oder 3, **dadurch gekennzeichnet, dass** die Änderung der optischen Eigenschaften des Ableitungsmittels (8) in einem Bereich detektiert wird, welcher sich außerhalb des im Wesentlichen parallel zur Trägeroberfläche (4) orientierten Bereichs des Ableitungsmittels (8) befindet.

5. Verfahren nach Anspruch 4, **dadurch gekennzeichnet, dass** zumindest 3 µl, vorzugsweise 4-5 µl Probenflüssigkeit auf dem Träger (4) aufgebracht werden.

6. Verfahren nach einem der Ansprüche 1 bis 5, **dadurch gekennzeichnet, dass** zwischen dem Detektieren der Änderung der optischen Eigenschaften des Ableitungsmittels (8) und dem Wegbewegen der Blotting-Einrichtung (5) vom Träger (4), die Blotting-Einrichtung (5) noch für eine vorgebbare Zeit in ihrer Position gehalten wird.

7. Verfahren nach einem der Ansprüche 1 bis 6, **dadurch gekennzeichnet, dass** nach dem Ableiten der überschüssigen Probenflüssigkeit und dem Wegbewegen der Blottingeinrichtung (5), der mit Probenflüssigkeit benetzte Träger (4) in einer Kühleinrichtung (102) abgekühlt wird.

8. Verfahren nach Anspruch 7, **dadurch gekennzeichnet, dass** die auf dem Träger (4) befindliche Probenflüssigkeit durch Eintauchen des Trägers (4) in ein Kühlmittel, welches vorzugsweise flüssiges Ethan ist, vitrifiziert wird.

9. Vorrichtung (100) zum Präparieren von Proben für ein Elektronenmikroskop, insbesondere für ein Kryo-Elektronenmikroskop, in einem Verfahren nach einem der Ansprüche 1 bis 8, mit:
- einem Haltemittel (3) zum Halten eines Trägers (4),
- einer bewegbaren Blotting-Einrichtung (5) zum Ableiten von einer auf dem Träger aufgebrachten, überschüssigen Probenflüssigkeit mittels eines im Wesentlichen flächiges Ableitungsmittels (8),
- einer Steuerung (17), welche dazu eingerichtet ist, die Blotting-Einrichtung (5) zum Träger (4) hin zu bewegen,
- einer klimatisierbaren Kammer (101), in welcher das Haltemittel (3) und die Blotting-Einrichtung (5) angeordnet sind,
**dadurch gekennzeichnet, dass**
die Vorrichtung (100) weiters eine optische Sensoreinrichtung (12) mit einer Lichtquelle (9) und einem Empfänger (10) aufweist, und die optische Sensoreinrichtung (12) eingerichtet ist, das Ableitungsmittel (8) mittels der Lichtquelle (9) zu beleuchten und eine Änderung der optischen Eigenschaften des Ableitungssmittels (8) mittels des Empfängers (10) zu detektieren und der Steuerung (17) zuzuführen, und die Steuerung (17) dazu eingerichtet ist, bei einer Änderung der optischen Eigenschaften des Ableitungsmittels (8) die Blotting-Einrichtung (5) vom Träger (4) weg zu bewegen.

10. Vorrichtung nach Anspruch 9, **gekennzeichnet durch** eine Kühleinrichtung (102) zum Abkühlen des mit Probenflüssigkeit benetzten Trägers (4).

11. Vorrichtung nach Anspruch 9 oder 10, **dadurch gekennzeichnet, dass** das im Wesentlichen flächige Ableitungsmittel (8) zwischen der Lichtquelle (9) und dem Empfänger (10) der optischen Sensoreinrichtung (12) angeordnet ist.

12. Vorrichtung nach Anspruch 11, **dadurch gekennzeichnet, dass** die Strahlen der Lichtquelle (9) und des Empfängers (10) sich am Ableitungsmittel (8) treffen, wobei sie einen Winkel von vorzugsweise kleiner als 30° in Bezug auf die optische Achse einschließen.

13. Vorrichtung nach einem der Ansprüche 9 bis 12, **dadurch gekennzeichnet, dass** die optische Sensoreinrichtung (12) auf der Blotting-Einrichtung (5) angeordnet ist.

## Claims

1. Method for preparing samples for an electron microscope, in particular for a cryo-electron microscope, said method comprising the following steps:
- fastening a carrier (4) in a holding device (3), wherein the holding device (3) is located in an air-conditionable chamber (101),
- applying a sample liquid to the carrier (4) for wetting the surface of the carrier (4) with sample liquid,
- diverting the excess sample liquid located on the carrier (4) by means of a diverting means (8) arranged on a pivotable blotting device (5) and receiving the sample liquid in the diverting means (8), wherein the blotting device (5) is moved towards the carrier (4) by means of a control device (17) for diverting the sample liquid by means of the diverting means (8),
- detecting the change in the optical properties of the diverting means (8) resulting from the excess sample liquid being received in the diverting means (8) using an optical sensor device (12), which has a light source (9) and a receiver (10), wherein the light source (9) illuminates the diverting means (8) and the receiver (10) detects the change in the optical properties, and the change in the optical properties of the diverting means (8) is supplied to the control device (17),
- moving the blotting device (5) away from the carrier (4) owing to the change in the optical properties of the diverting means (8) which is detected by the optical sensor device (12) and supplied to the control device (17).

2. Method according to Claim 1, **characterized in that** the diverting means (8) is substantially flat and, during diverting of the sample liquid, a region of the diverting means (8) is oriented substantially parallel to the surface of the carrier (4).

3. Method according to Claim 2, **characterized in that** the movement of the diverting means (8) arranged on the blotting device (5) towards the carrier (4) is delimited by a component (15) of the holding device (3) acting as stop.

4. Method according to Claim 2 or 3, **characterized in that** the change in the optical properties of the diverting means (8) is detected in a region which is outside that region of the diverting means (8) which is oriented substantially parallel to the carrier surface (4).

5. Method according to Claim 4, **characterized in that** at least 3 µl, preferably 4-5 µl of sample liquid are applied to the carrier (4).

6. Method according to one of Claims 1 to 5, **characterized in that**, between the detection of the change in the optical properties of the diverting means (8) and the movement of the blotting device (5) away from the carrier (4), the blotting device (5) is still held in its position for a presettable time.

7. Method according to one of Claims 1 to 6, **characterized in that**, once the excess sample liquid has been diverted and the blotting device (5) has been moved away, the carrier (4) wetted with sample liquid is cooled in a cooling device (102).

8. Method according to Claim 7, **characterized in that** the sample liquid located on the carrier (4) is vitrified by means of the carrier (4) being immersed in a coolant, which is preferably liquid ethane.

9. Apparatus (100) for preparing samples for an electron microscope, in particular for a cryo-electron microscope, in a method according to one of Claims 1 to 8, said apparatus comprising:
- a holding means (3) for holding a carrier (4),
- a movable blotting device (5) for diverting excess sample liquid applied to the carrier by means of a substantially flat diverting means (8),
- a control device (17), which is designed to move the blotting device (5) towards the carrier (4),
- an air-conditionable chamber (101), in which the holding means (3) and the blotting device (5) are arranged,
**characterized in that**
the apparatus (100) furthermore has an optical sensor device (12) comprising a light source (9) and a receiver (10), and the optical sensor device (12) is designed to illuminate the diverting means (8) by means of the light source (9) and to detect a change in the optical properties of the diverting means (8) by means of the receiver (10) and to supply this to the control device (17), and the control device (17) is designed to move the blotting device (5) away from the carrier (4) in the event of a change in the optical properties of the diverting means (8).

10. Apparatus according to Claim 9, **characterized by** a cooling device (102) for cooling the carrier (4) wetted with sample liquid.

11. Apparatus according to Claim 9 or 10, **characterized in that** the substantially flat diverting means (8) is arranged between the light source (9) and the receiver (10) of the optical sensor device (12).

12. Apparatus according to Claim 11, **characterized in that** the beams from the light source (9) and the receiver (10) impinge upon the diverting means (8), wherein said beams enclose an angle of preferably less than 30° with respect to the optical axis.

13. Apparatus according to one of Claims 9 to 12, **characterized in that** the optical sensor device (12) is arranged on the blotting device (5).

## Revendications

1. Procédé pour la préparation d'échantillons pour un microscope électronique, en particulier pour un microscope cryoélectronique, comprenant les étapes suivantes :
- la fixation d'un support (4) dans un dispositif de maintien (3), le dispositif de maintien (3) se trouvant dans une chambre (101) pouvant être climatisée,
- l'application d'un liquide d'échantillon sur le support (4) pour humecter la surface du support (4) avec du liquide d'échantillon,
- l'évacuation du liquide d'échantillon excédentaire se trouvant sur le support (4) grâce à un moyen d'évacuation (8) disposé sur un dispositif de buvardage (5) pivotant et l'absorption du liquide d'échantillon dans le moyen d'évacuation (8), le dispositif de buvardage (5) étant déplacé, au moyen d'une commande (17), vers le support (4) pour l'évacuation du liquide d'échantillon grâce au moyen d'évacuation (8),
- la détection de la modification des propriétés optiques du moyen d'évacuation (8), obtenue grâce à l'absorption du liquide d'échantillon excédentaire dans le moyen d'évacuation (8), avec un dispositif de détection optique (12) qui présente une source lumineuse (9) et un récepteur (10), la source lumineuse (9) éclairant le moyen d'évacuation (8) et le récepteur (10) détectant la modification des propriétés optiques, et la modification des propriétés optiques du moyen d'évacuation (8) étant amenée à la commande (17),
- l'éloignement du dispositif de buvardage (5) du support (4) en raison de la modification, détectée par le dispositif de détection optique (12) et amenée à la commande (17), des propriétés optiques du moyen d'évacuation (8).

2. Procédé selon la revendication 1, **caractérisé en ce que** le moyen d'évacuation (8) est sensiblement en nappe et **en ce que**, lors de l'évacuation du liquide d'échantillon, une zone du moyen d'évacuation (8) est orientée sensiblement parallèlement à la surface du support (4).

3. Procédé selon la revendication 2, **caractérisé en ce que** le déplacement vers le support (4) du moyen d'évacuation (8) disposé sur le dispositif de buvardage (5) est limité par un composant (15) du dispositif de maintien (3) servant de butée.

4. Procédé selon la revendication 2 ou 3, **caractérisé en ce que** la modification des propriétés optiques du moyen d'évacuation (8) est détectée dans une zone qui se trouve en-dehors de la zone orientée sensiblement parallèlement à la surface de support (4) du moyen d'évacuation (8).

5. Procédé selon la revendication 4, **caractérisé en ce que** l'on applique au moins 3 µl, de préférence 4-5 µl de liquide d'échantillon sur le support (4).

6. Procédé selon l'une des revendications 1 à 5, **caractérisé en ce que**, entre la détection de la modification des propriétés optiques du moyen d'évacuation (8) et l'éloignement du dispositif de buvardage (5) du support (4), le dispositif de buvardage (5) est encore maintenu dans sa position pendant une durée prescriptible.

7. Procédé selon l'une des revendications 1 à 6, **caractérisé en ce que**, après l'évacuation du liquide d'échantillon excédentaire et l'éloignement du dispositif de buvardage (5), le support (4) humecté avec du liquide d'échantillon est refroidi dans un dispositif de refroidissement (102).

8. Procédé selon la revendication 7, **caractérisé en ce que** le liquide d'échantillon se trouvant sur le support (4) est vitrifié en plongeant le support (4) dans un agent refroidisseur qui est de préférence de l'éthane liquide.

9. Dispositif (100) pour la préparation d'échantillons pour un microscope électronique, en particulier pour un microscope cryoélectronique, dans un procédé selon l'une des revendications 1 à 8, avec :
- un moyen de maintien (3) pour le maintien d'un support (4),
- un dispositif de buvardage (5) mobile pour évacuer un liquide d'échantillon excédentaire appliqué sur le support grâce à un moyen d'évacuation (8) sensiblement en nappe,
- une commande (17) étudiée pour déplacer le dispositif de buvardage (5) vers le support (4),
- une chambre (101) pouvant être climatisée, dans laquelle le moyen de maintien (3) et le dispositif de buvardage (5) sont disposés,
**caractérisé en ce que**
le dispositif (100) présente par ailleurs un dispositif de détection optique (12) avec une source lumineuse (9) et un récepteur (10), et **en ce que** le dispositif de détection optique (12) est étudié pour éclairer le moyen d'évacuation (8) à l'aide de la source lumineuse (9) et pour détecter une modification des propriétés optiques du moyen d'évacuation (8) à l'aide du récepteur (10) et amener celle-ci à la commande (17), et la commande (17) étant étudiée, en cas d'une modification des propriétés optiques du moyen d'évacuation (8), pour éloigner le dispositif de buvardage (5) du support (4).

10. Dispositif selon la revendication 9, **caractérisé par** un dispositif de refroidissement (102) pour refroidir le support (4) humecté avec le liquide d'échantillon.

11. Dispositif selon la revendication 9 ou 10, **caractérisé en ce que** le moyen d'évacuation (8) sensiblement en nappe est disposé entre la source lumineuse (9) et le récepteur (10) du dispositif de détection optique (12).

12. Dispositif selon la revendication 11, **caractérisé en ce que** les rayons de la source lumineuse (9) et du récepteur (10) se rencontrent au niveau du moyen d'évacuation (8), dans lequel ils forment un angle de préférence inférieur à 30° par rapport à l'axe optique.

13. Dispositif selon l'une des revendications 9 à 12, **caractérisé en ce que** le dispositif de détection optique (12) est disposé sur le dispositif de buvardage (5).
